Europäisches Patentamt

**European Patent Office**

**Office européen des brevets**

(19)

(11) Publication number: **0 002 944**

**B1**

(12) **EUROPEAN PATENT SPECIFICATION**

(45) Date of publication of patent specification: **13.10.82**

(51) Int. Cl.³: **G 03 B 35/14**

(21) Application number: **78300887.3**

(22) Date of filing: **21.12.78**

(54) **Method and apparatus for marking a plurality of film frames each containing an image of the same subject.**

(30) Priority: **27.12.77 US 864748**

(43) Date of publication of application:
**11.07.79 Bulletin 79/14**

(45) Publication of the grant of the patent:
**13.10.82 Bulletin 82/41**

(84) Designated Contracting States:
**DE FR GB NL SE**

(56) References cited:
**DE - A - 1 597 168**
**DE - A - 2 654 959**
**GB - A - 327 365**
**GB - A - 937 155**
**US - A - 3 684 370**
**US - A - 3 895 867**

(73) Proprietor: **THE THREE DIMENSIONAL PHOTOGRAPHY CORPORATION**
**955 Yonkers Avenue**
**Yonkers New York 10704 (US)**

(72) Inventor: **Smith, Edgar Charles**
**2169 23rd Street, Long Island City**
**Queens, New York 11105 (US)**
Inventor: **Campbell, James Bernard**
**270 Seaman Avenue**
**New York, N.Y. 10034 (US)**

(74) Representative: **Geldard, David Guthrie et al,**
**URQUHART-DYKES AND LORD 11th Floor, Tower House Merrion Way**
**Leeds, LS2 8PB West Yorkshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method and apparatus for marking a plurality of film frames each containing an image of the same subject

This invention is directed to a method and an apparatus for marking film material comprising a plurality of film frames, each containing an image of the same subject, the images being stereo related so that they may be used in stereoscopic reproduction.

The marking of film frames for various purposes is known, both in ordinary photography and in stereoscopic photography. For example, DE-OS 1597168 discloses apparatus which can apply marks to the edge of a series of picture elements, the marks then being used to ensure correct alignment of the elements with a lenticular screen to produce a desired stereogram. DE-OS 2654959 discloses the application of at least two marks to corresponding points within the images of left and right negatives of a stereo pair to ensure correct orientation of the negatives of printing. Such earlier techniques have disadvantages which are overcome by the present invention.

In accordance with the invention, a method of marking film material comprising a plurality of film frames each containing an image of the same subject, the images being stereo related so that they may be used in stereoscopic reproduction, comprises the steps of selecting homologous points of each of the images and marking the frame area surrounding each image with a mark according to the homologous points.

The film frames may be successive film frames on a continuous strip of material, and if this is the case then the invention may be practised by establishing the centre-to-centre distance between homologous points of a selected pair of images in order to determine a desired stereo base distance and marking the frame area surrounding each image with a mark located according to the stereo base distance.

Apparatus according to the invention comprises a support for supporting a carriage assembly, the carriage assembly being movable on the support and having a transparent member for supporting the film frame, optical means on the support for optically viewing the images from at least two frames and establishing the centre-to-centre distance between homologous points of those images and means for causing a mark to be placed on the frame area surrounding each image as the carrier assembly is moved in accordance with that distance. As used herein "homologous points" is defined as two point images in a stereo related pair of images which point images exactly correspond.

In one embodiment a desired homologous point is selected by optically superimposing a position adjustable cross-hair on a selected point of a first image; fixing the location of the cross-hair and marking the frame area surrounding that image. For each successive film frame the point of the image homologous to the selected point of the first image is located optically under the cross-hair and the frame area surrounding each image is then marked. In another embodiment images from two selected film frames of a plurality of successive frames on a continuous strip of film material are optically superimposed and adjusted to render the selected homologous points of the images coincident, desirably by visual comparison of the images. The homologous points used can be selected as desired. The stereo base distance can then be determined as the distance between the selected homologous points of the images contained in the two selected frames. The frame area surrounding each of the successive images is marked at a distance from the frame area surrounding any other one of those images which is a multiple or rational fraction of the stereo base distance. Desirably the stereo base distance is determined from the first and last frames of the succession and the frame area surrounding the images is marked at a plurality of locations by dividing the stereo base distance by one less than the number of frames in the succession. The marking means may be optical or mechanical means. After marking in accordance with the invention, the film strip may be inserted into an enlarger and aligned according to the marks associated with each film frame. A portion of the image contained in each film frame is then sequentially printed onto photographic material, the portion being determined by a movable line grid. The material is processed to produce a positive picture. The stereoscopic effect is provided by a lenticular screen superimposed and maintained in registration with the picture.

The marking system of the invention overcomes the problem of providing rapid and accurate alignment of film frames in stereoscopic printing equipment.

The invention will be better understood from the following description thereof taken in conjunction with the accompanying drawings, in which:

Figure 1 is a block diagram showing the general flow sequence of the present invention;

Figures 2 and 3 are partial perspective views of the overall optical bench;

Figure 4 is an end view in partial section of the optical bench;

Figure 5 is a partial perspective elevation view of one end of the carriage assembly means of the optical bench;

Figure 6 is a cross-sectional partial view of the carriage assembly means of Figure 5;

Figure 7 is a partial elevation view of the end of the carriage assembly means of Figure 5;

Figure 8 is a partial schematic side view of the carriage assembly means of Figure 5;

Figure 9 is a partial cross-sectional view of Figure 6;

Figure 10 is a partial perspective view of the film support means;

Figure 11 is a partial elevation view of another end of the carriage assembly means;

Figure 12 is a partial side view of the carriage assembly means of Figure 11;

Figure 13 is a partial cross-sectional view of a portion of the lower optical section;

Figure 16 is a schematic view of the operation of the upper and lower optical sections;

Figure 17 is a partial schematic of a film frame showing the registration marks;

Figure 18 is a schematic of an optical means for generating the frame registration marks;

Figure 19 is a partial schematic of the enlarger and line grid for the printing of the images contained in the film frames;

Figure 20 is a partial schematic of the assembled stereoscopic photograph showing the lenticular viewing screen;

Figure 21 is a partial schematic of a camera suitable for use in producing the images to be processed by the apparatus and method of this invention.

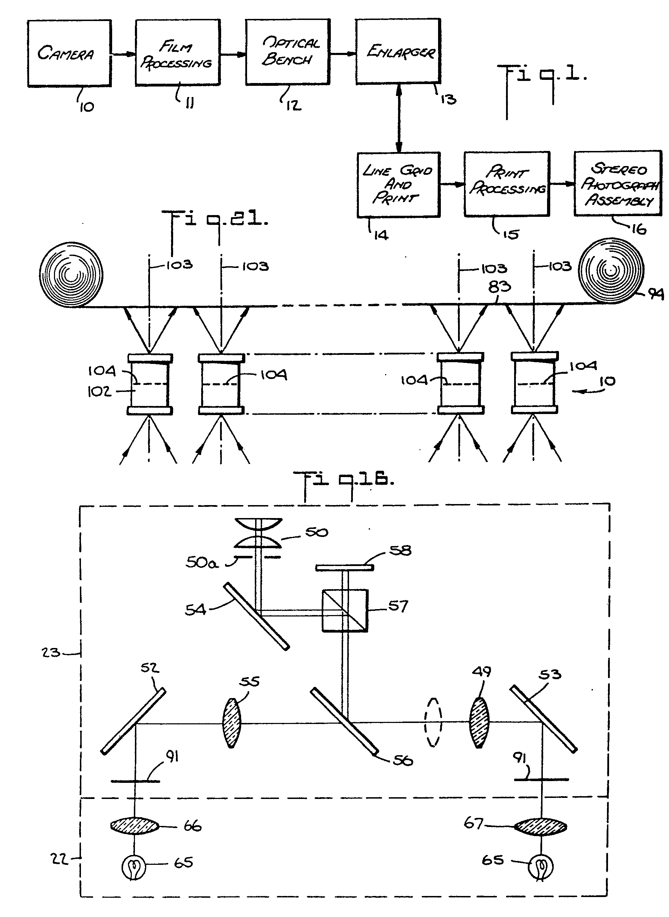

Referring to the drawings, Figure 1 shows in a block diagram generally the sequential steps of the method for producing stereoscopic photograph. A camera 10 provides a plurality of film images of the subject on photographic material. The photographic material is processed at 11 in the usual manner for use in the optical bench 12. In the optical bench 12 the film comprises preferably a continuous strip of a plurality of frames, each containing an image of the same subject, all the images being stereo related. At least two images are optically viewed at the optical bench to determine selected homologous points of the images and the frame area surrounding each image is marked for subsequent registration in the enlarger 13. Each of the film frames is sequentially inserted in the enlarger 13 wherein mechanical or optical registration means cooperate with the marks to align the film frame for projection of the image therefrom onto a line grid and photographic paper 14. The photographic paper is thereafter processed at 15 to produce a positive picture. A lenticular screen is assembled at 16 to overlie the positive picture to form a stereographic reproduction of the photographed subject.

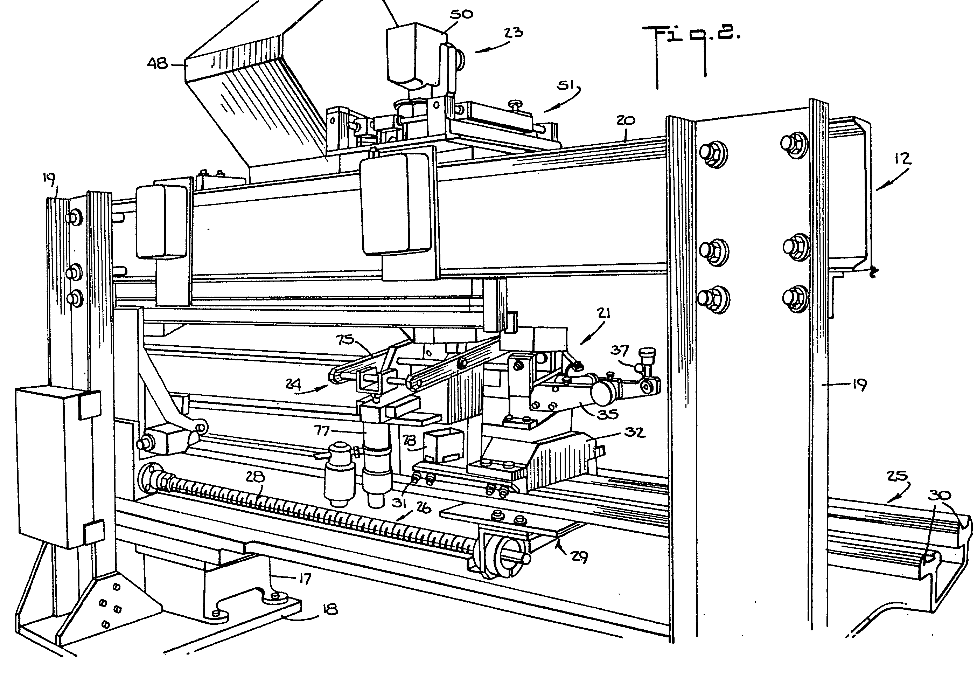

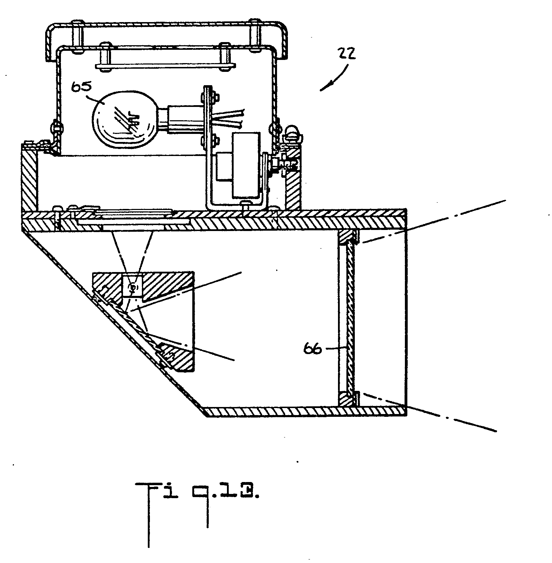

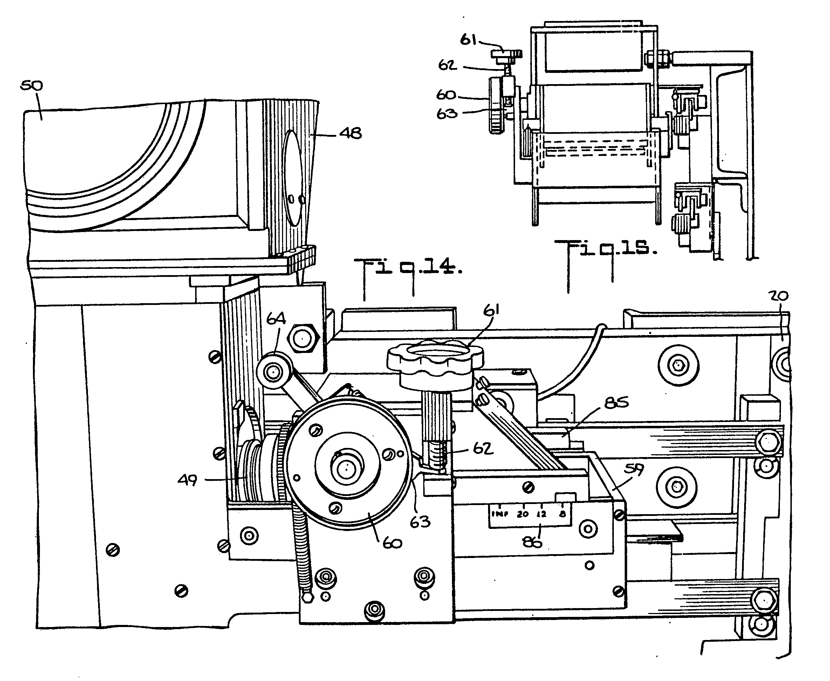

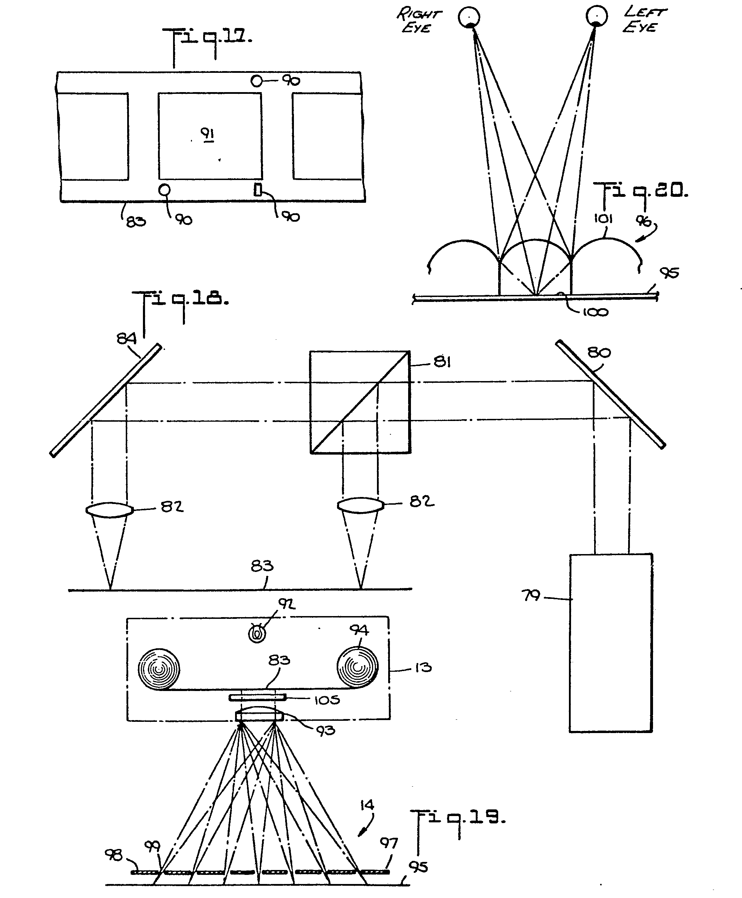

Referring to Figures 2 to 4 the optical bench 12 comprises a support 17 securely mounted to a base 18. The support 17 comprises two vertical supports 19 and a horizontal support 20 extending between the vertical supports. The support 17 supports a carriage assembly 21, the carriage assembly 21 being movable on the support 17 and supporting the film frames. The support 17 also supports lower section optics 22 (to be described in Figures 13 and 16) which cooperate with upper section optics 23 (to be described in Figures 15 and 16) supported by the vertical and horizontal supports 19 and 20.

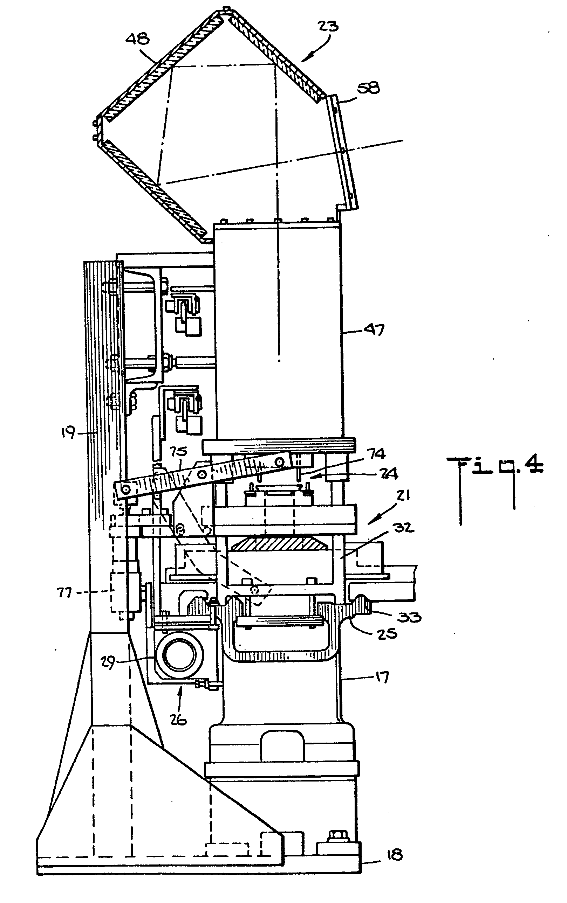

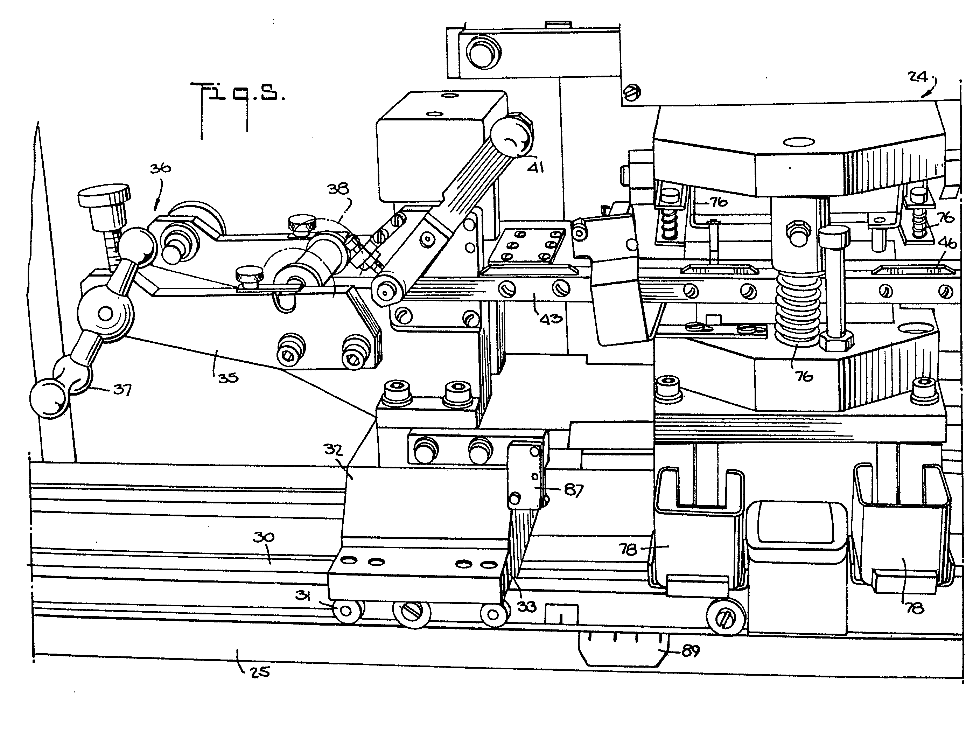

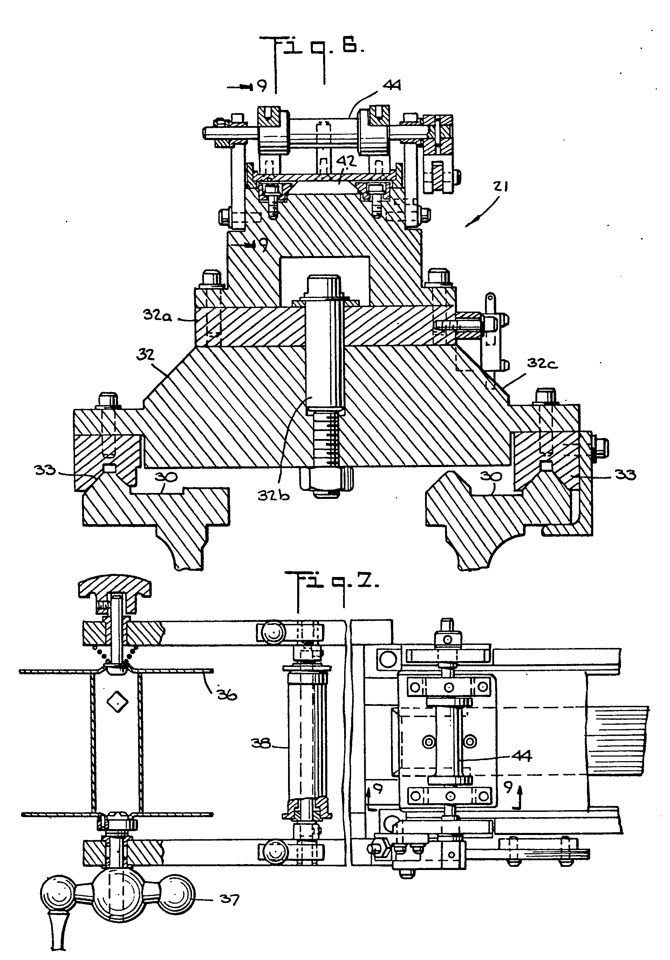

Lower and upper section optics comprise optical means for the optical viewing of the images for establishing homologous points on each image. The carriage assembly 21 is horizontally advanced or retracted on a table 25 by a programmed mechanical or electro-mechanical means 26 so as to allow a plurality of marks to be placed sequentially on the film. The programmed mechanical or electro-mechanical means 26 can be a synchronous stepping motor 27 rotatably driving a worm gear 28 through an appropriate motor gear drive. The worm gear 28 is affixed at one end to the carriage assembly means by a bracket assembly 29 which passes through a slot in the table 25 and to the underside of the carriage assembly. The motor 27 is supported by the table 25. The table 25 further supports optical means (Fig. 19) or mechanical means 24 for causing a mark to be placed on the frame area surrounding each of the plurality of images after each incremental movement of the carriage assembly 21. The table 25 is a horizontal surface having machined grooves 30 which extend the length of the table. The carriage assembly means is mounted on a plurality of rollers 31 which slide on the machined grooves 30. A plaurlity of rollers are located at each end of the carriage 32. In addition to the rollers 31, the carriage 32 has complementary grooves 33 (Figure 6) which slidably engage the grooves 30 of the table 25. Extending from the motor end of the carriage assembly is a hand wheel 34. Hand wheel 34 is a manual control for adjusting the vertical position of the projected images by pivoting the carriage assembly. The pivoting adjustment compensates for any displacement in the images caused by the camera 10 being out of level in a horizontal plane while the film is being exposed. Adjustment is accomplished by pivoting upper carriage 32a about pivot 32b. Pivot 32b is located generally at the end of the carriage assembly means opposite that of hand wheel 34. Pivot 32b joins the upper carriage 32a with a lower carriage 32c to form the carriage 32.

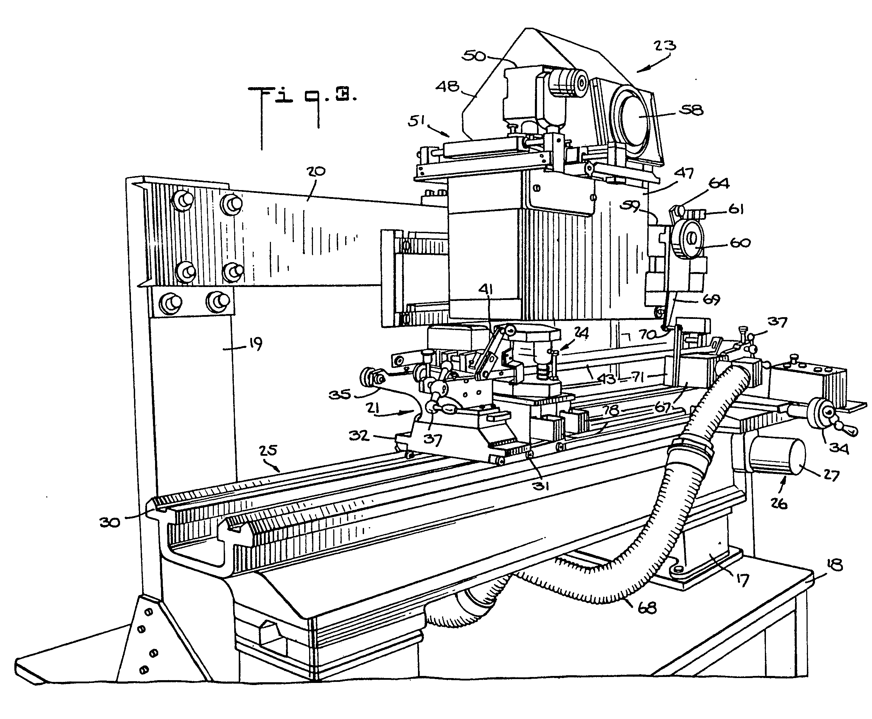

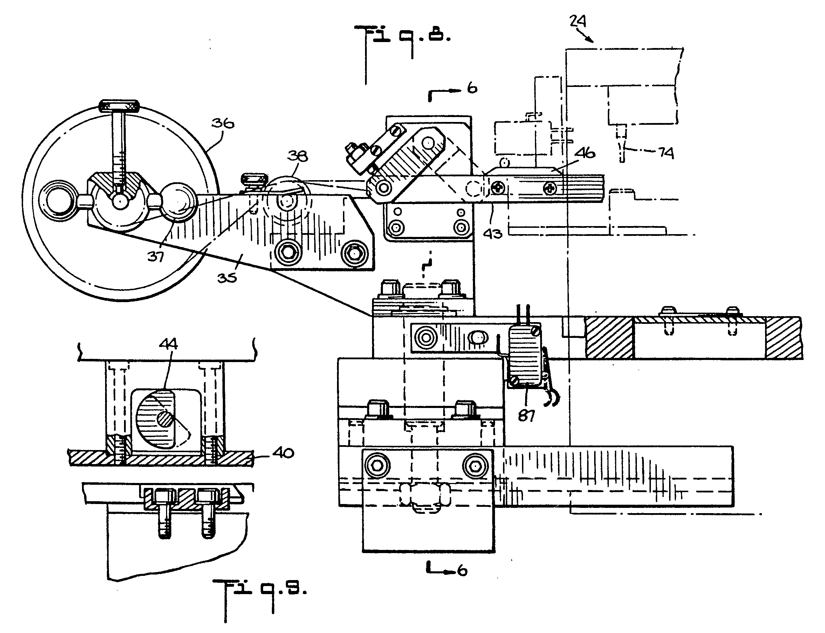

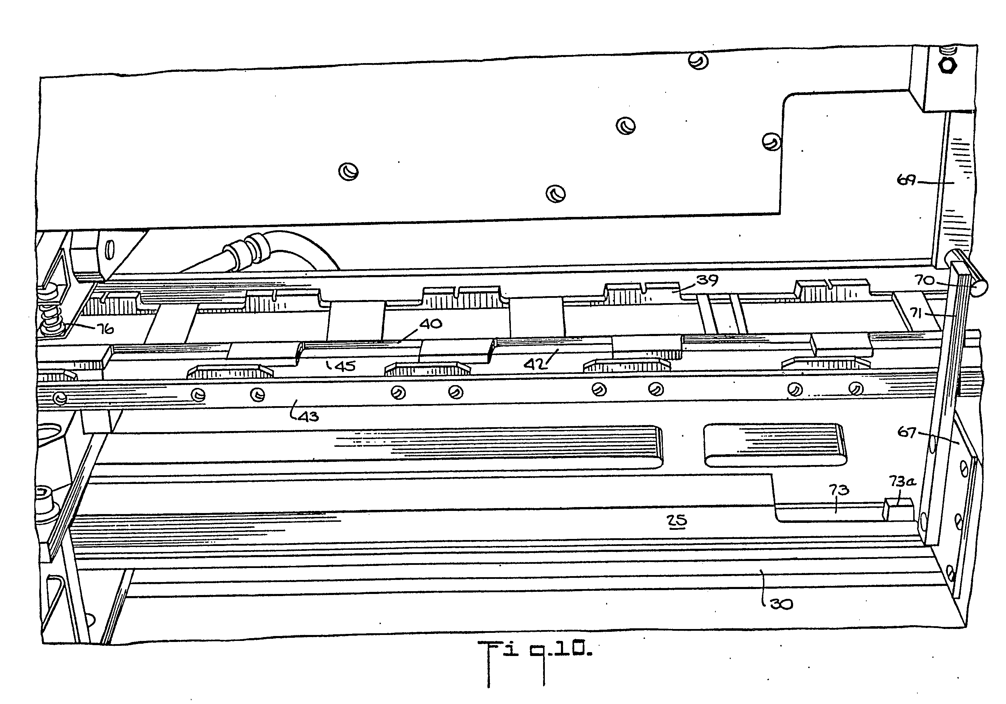

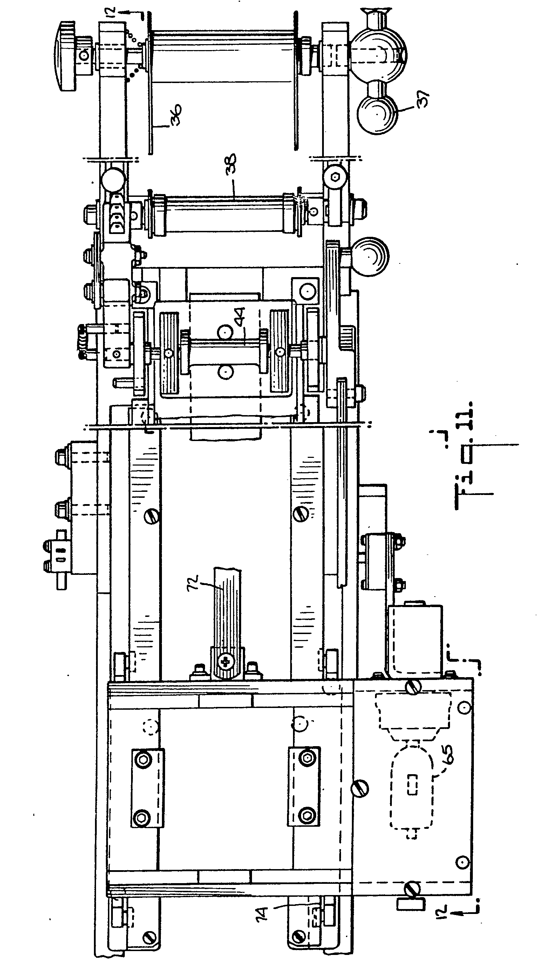

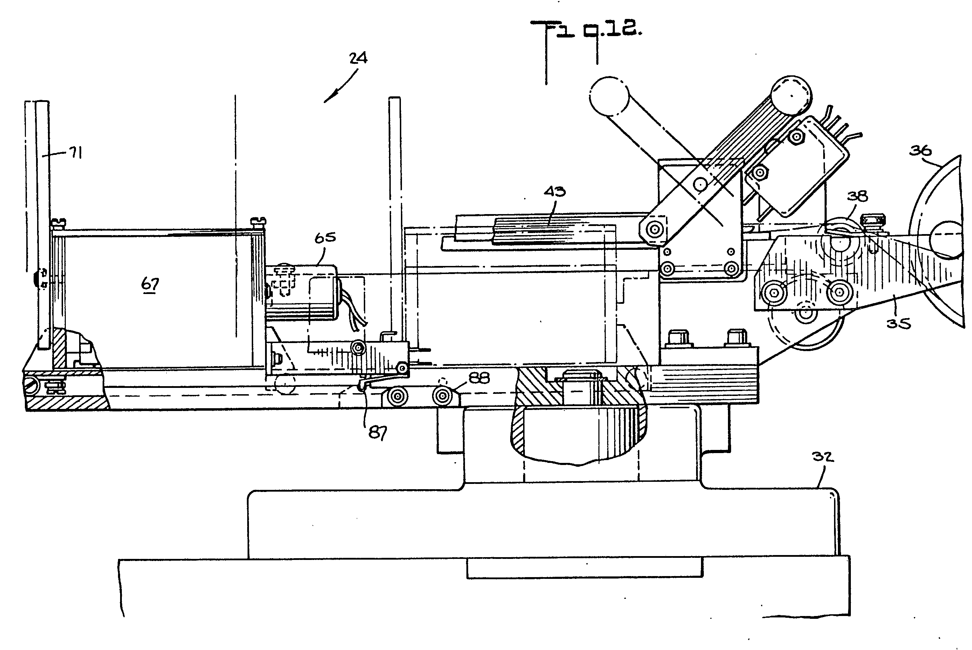

Referring to Figures 5 and 7 to 12 extending from a bracket 35 on each end of the carriage 32 is a respective film storage or take-up spool 36 and manual means 37 for rotating each spool. An idler film roller 38 guides the film on and off a respective spool. Extending generally between the spools 36 is a film support means comprising a film guide 39, a film pressure plate 40, a film pressure clamp 41 and a transparent, for example, glass, member 42. The film extending between spools 36 is located vertically spaced from and under the film pressure plate 40, overlying the transparent member 42. The film pressure clamp 41 raises and lowers a clamp arm 43 attached to a side edge of the film pressure plate 40. The operation of the clamp 41 causes the rotation of a cam 44 which in an open position (shown in full line in Figure 9) raises the film pressure plate 40 and maintains the plate 40 vertically spaced from the film. In the closed position (shown in dotted line in Figure 9) cam 44 permits the film pressure plate 40, which lies over the film, to be urged against the film. The urging of the plate 40 against the film can be by causing the cam 44 to press the plate 40 downwardly or by releasing a spring tension or simply by freely releasing the plate to lie over the film. The film, in turn, is pressed against the transparent member 42. The film pressure plate 40 is a transparent member having slots 45 along its parallel edges. The slots 45 permit the mechanical or optical marking means to mark the film. The clamp arm 43 has a plurality of spaced cam-like surfaces 46 extending along the longitudinal length of the arm. When in the clamped or engaged position such that the pressure plate 40 is urged against the film, each cam-like surface is rotatably moved opposite a respective slot 45. Located along the length of the other side edge of the film pressure plate is a film guide 39 to prevent the lateral movement of the film as it is removed or wound from each spool 36 or as the carriage assembly 21 moves.

The optical means (Figure 16) comprises a lower section 22 and an upper section 23 optics. The upper section optics 23 is fixedly secured to the horizontal support 20. The upper section optics comprises two optical enclosures 47, 48; a movable stereo base lens 49 and an eyepiece 50. The eyepiece 50 is mounted in a framework 51 which permits the eyepiece to be fixedly adjusted in two directions in a horizontal plane. Optical enclosure 47 contains a plurality of reflecting mirrors 52, 53, 54; a lens 55; a beam combiner 56 and a beam splitter 57. Optical enclosure 48, which is supported by optical enclosure 47, contains viewing screen 58 which may be ground glass or of fiber optics. In Figure 4, additional reflecting mirrors are shown in the enclosure 48 in order to correct the orientation of the image shown on the screen 58. Referring to Figures 14 and 15 the stereobase lens 49 is mounted in a frame 59 extending from optical enclosure 47. The stereo base lens 49 is horizontally movable within the frame 59 by two hand wheels 60 and 61. Lens 49 is pre-focused to the film plane at the time of bench assembly. Hand wheel 60 permits the coarse horizontal movement of the lens 49 by a suitable gear interconnecting the lens and the frame. Hand wheel 61 has a screw 62 which engages follower 63 attached to the lens 49. Hand wheel 61 permits the fine horizontal movement of the lens 49 for precise optical alignment. A locking arm 64 extends from an interconnection between the lens 49 and frame 59 for locking the lens 49 in the desired horizontal position for the homologous points. The horizontally movable stereo base lens 49 permits the optical superimposing of two images and with lens 67 (to be described) establishes the center-to-center distance of the chosen homologous point for the superimposed images.

Lower section optics 22 shown in Figures 13 to 16 are fixedly secured to the support 17 and comprise an optical source 65 for projecting an image through a respective lens 66, 67 to the upper section optics 23. Figure 13 shows a preferred arrangement of the lower section optics 22 for either the selected or first frame or the second or last frame. Lens 66 projects the image from a selected frame or from the first frame of a selected pair of frames from the plurality of film frames. Lens 67 projects the image from the second or last frame of a selected pair of frames from the plurality of film frames. Lenses 66 and 67 are each cooled by a flexible tube 68 connected to a blower (not shown).

Referring to Figures 3 and 10 extending downwardly from the lens 49 is an arm 69 with a projecting pin 70. Pin 70 engages with a strut 71 which extends from the housing of lens 67. The pin 70 moves lens 67 horizontally with the horizontal movement of lens 49. Strut 71 is urged against pin 70 by a leaf spring (not shown) which is attached to the carriage assembly 21 adjacent one end of the film pressure plate 40. Table 25 has a longitudinally extending slot 73 into which projects a lens guide 73a for the linear movement of lens 67.

The film marking means 24 provides marks on the frame area surrounding the image which permit the subsequent registration of each image during the printing step. The marks are caused by the removal of a portion from the area surrounding each image or by changing the opacity of the area surrounding each image. The marks can be effected mechanically, as by a punch, or optically, as by a focused laser. In the apparatus shown in Figure 2 to 15 mechanical punches 74 are shown. An alternative optical means is shown in Figure 18. In Figures 2 to 15 there is shown a lever mechanism 75 which causes the punches 74 to move downwardly and mark the film. The punch 74 is urged out of engagement with the film by springs 76. The lever mechanism 75 is actuated by a conventional drive, for example, a fluid actuated piston and cylinder 77. The operation of the mechanical punches 74 causes the removal of a selected portion of the frame area surrounding the images. Extending vertically from a centrally disposed inward portion of the table 25 is a frame for supporting a plurality of receptacles 78 for catching the removed portions of the film. As shown in Figure 2 a single receptacle is on one side of the film while the other side has two horizontally spaced apart receptacles.

In Figure 18 the optical beam of a laser 79, preferably having a wavelength of 0.7 to 0.3 microns, is reflected from a mirror 80 to a beam splitter 81. Beam splitter 81 divides the optical beam into two beams which are directed onto the film 83 through lenses 82. One of the two divided beams is directed to the film by a mirror 84. The laser removes a selected portion of the emulsion layer from the frame area surrounding the image or adds to the optical density of a portion of the emulsion layer. the markings 90 on the film 83 whether optically or mechanically formed are representatively shown in Figure 17. The markings may be arranged in a different orientation, size, shape or location relative to the frame or to each other. The orientation, size, shape or location differentiation permits the recognition of the correct registration for each frame by a mechanical means or optical sensor during the printing step of each image.

In order to actuate various features of the apparatus and to carry out the steps of the method, the apparatus includes selective electrical switches, instruments, monitoring means, measuring scales and protective mechanical and electrical features. By way of example the position of lens 49 is detected by an electrical switch 85 operatively engaged with the interconnection between the lens 49 and the frame 59. The approximate stereo base distance is visually determined by the scale 86. At each end of the carriage assembly 21 is a microswitch 87 which engages a switch cam 88 on the table 25 for detecting the limits of horizontal movement of the carriage 32. A visual indication of a position of the carriage assembly 21 is given by scale 89. Various other mechanical, electrical and electro-mechanical device or combinations thereof which are desirable for the control and operation of the apparatus and method can be provided and understood by one skilled in the art.

In order to determine the stereo base distance for the film 83, the images from two frames of the film are respectively projected through each lens 66, 67 of the lower section optics 22. The images projected through the lenses are those from the first and last frames 91 of the image sequence. The images from the first and last frames are projected to the upper section optics 23 located in the two enclosures 47, 48. The upper section optics 23 includes a mirror 52 to reflect the image to a further lens 55 and to a beam combiner 56. The two images are projected to a beam splitter 57. The superimposition of the two images is then reflected from a mirror 54 to the eyepiece 50 and to a screen 58. The position of the image associated with the projected last frame can be adjusted so that selected homologous points of the two images coincide by the horizontal movement of the stero base lenses 49 and 67. When the images projected from the first and last frames are adjusted in the horizontal and vertical positions (the latter being effected by hand wheel 34), the desired stereo base distance is set. The stereo base distance is determined with a tolerance of $2.5 \times 10^{-4}$ cm. The stereo base distance is the distance between the selected homologous points of the images contained in the first and last frames. This distance can be varied by selection of different homologous points by the operator, so adjusting the optical centre-to-centre distance between the images on all the frames. By suitable selection and adjustment of the stereo base distance the operator can cause different parts of the subject image to appear in "front" or "behind" the optical viewing plane (i.e. the plane of the surface of the photosensitive material adjacent to the lenticular screen) in the final assembled stereographic product. Apparently lying in the optical viewing plane itself is the centre plane image containing the selected homologous points; The centre plane image is also commonly referred to as the "aim plane" and any particular selected point in that plane as the "aim point".

In operation a multi-objective lens camera such as that shown in Figure 21 simultaneously photographs the subject with the exposure time for each image being substantially equal to provide a film strip 83 having a plurality of subject images 91. The film is processed to provide a plurality of sets of groups of frames, each group having a number of frames (for example, seven) equal to the number of lenses in the camera. The film strip 83 is placed on the optical bench 12 such that the first and last frames are aligned for optical viewing when the carriage is in the starting position as determined by scale 89. The operator selects a desired homologous point that will lie in the centre plane image concentrating on the aesthetic composition of the subject and film image being viewed. The operator selects the desired stereo base distance by adjusting the stereo base lenses 49 and 67 to superimpose the selected homologous points of the images contained in the first and last frames. In a specific embodiment electronic control logic divides the stereo base distance by the number of frames less one, (for example, six) to generate the center-to-center distance between each frame. The carriage assembly 21 advances the film strip 83 in one-sixth increments and at each increment the electronic control logic generates a marking or coding signal which mechanically or optically marks the frame area surrounding each image. Each frame area is marked successively after advancing the film the incremental distance. After marking the film is placed in a projection printing assembly comprising an enlarger 13 and a line grid apparatus 14 for registration according to the marking and for exposure of each frame onto print paper 95. The pring paper 95 is located in the line grid apparatus 14. After printing the paper 95 is further processed at 15 and a registered lenticular lens plate 96 is placed over the picture and the combination is laminated to produce the final three-dimensional picture at 16. As shown schematically in Figure 19 the enlarger 13 includes an optical source 92 which projects through lens 93 a selected image 91 from the film 83 which has been mechanically or optically aligned by means 105. The film 83 is stored in a cassette 94 which has been removed from the camera 10 and processed at 11 and marked on the optical bench 12.

The image 91 is projected towards a line grid 14. The line grid 14 comprises a movable line grid 97 which is divided into a plurality of opaque 98 and transparent 99 sections extending across the width of the grid in a repeating pattern. The basic repeating pattern has a width equal to the width of the base 100 of each lens 101 on the lenticular screen 96. The width of the transparent portion 99 of each basic repeating pattern is equal to the total width of that basic pattern divided by the number of camera lenses, i.e., the number of simultaneously taken film frames. For example, if there are seven lenses and the total width of the basic repeating pattern is 0.533 mm, then the width of the transparent portion 99 is 0.076 mm and the opaque portion 98 is 0.457 mm. The total number of the basic repeating pattern is equal to the total number of parallel lenses 101 on the lenticular viewing screen 96 of the final product. The line grid 97 is located between the enlarger 13 and the print paper 95.

In processing, each image is printed onto the paper 95 and simultaneously across the entire grid 97 for the width of each of the transparent portions 99 of the repeating pattern. The film 83 is advanced by one frame, and the grid 97 is moved in the same direction in 0.076 mm increments so as to print simultaneously across the paper 95 the image from each successive frame. Each of the images 91, for example, seven, is printed sequentially but for each lens 101 of the lenticular viewing screen 96. At the completion of the processing in the line grid 97 the paper 95 has a plurality of prints across the paper equal in number to the number of the lenses 101 on the lenticular viewing screen 96. The width of each print being equal to the base 100 of each lens of the viewing screen and each print comprising each of the images 91.

The print paper 95 is then processed to produce the photographed subject. The lenticular viewing screen 96 is placed over the picture so as to align each lens base 100 with a respective one of the now-developed repeating pattern, and laminated into a fixed position.

As used herein "paper" refers to the use of any photosensitive material either positive or negative. Any commercially available photosensitive film can be used to provide the plurality of images. Preferably the film should be dimensionally stable and an Estar (Trade Mark) based film is especially desirable if the marking is accomplished mechanically.

In another embodiment the selected image 91 from a continuous strip 83 of film is optically viewed through the upper section optics 23 and only one of the lenses of the lower section optics 22. Preferably the selected frame is the first frame and the associated first frame lens 66. The operator selects a desired point in the image that is required to be in the centre plane image according to the aesthetic composition of the subject and image being viewed. A parallax corrected cross-hair 50a located in eyepiece 50 is disposed over the selected image so as to register the cross-hair with the chosen point. The cross-hair is positionally adjustable in framework 51 along two axes in the plane of the strip. The position of the cross-hair is fixed by clamping or locking of the position adjustment and the frame area surrounding the selected image is marked. The strip is then advanced to select the homologous point of a succeeding image and the frame area surrounding that image is marked. The homologous point is selected by the positioned fixed cross-hair. Each of the images is successively and sequentially moved to the cross-hair and the homologous point is registered with the cross-hair and the frame area surrounding the image is marked. The marked continuous film strip is thereafter registered in the enlarger-line grid to print the stereoscopic photograph.

Instead of a continuous film strip, the method can be practised using a plurality of separate film frames provided from a plurality of cameras or from a plurality of camera positions. In this technique a selected film frame is placed on the bench and the cross-hair is superimposed over the selected homologous point of the image and is fixed in position. The frame area surrounding the image is marked. A second film frame is inserted into the bench and viewed optically until the cross-hair determines the point of that image that is homologous to the selected point of the first image. The registration mark is then made on the frame area surrounding the second image and the frame is removed. A third frame is inserted into the bench and the technique is repeated for each of the plurality of film frames.

Application Serial No. 78.300888.1, published under No. 2945, is directed to an enlarger 13 and line grid assembly 14 wherein each image from a frame 91 of the film 83 is mechanically or optically aligned in means 105 for projection onto the print paper 95.

Figure 21 shows a schematic view of one embodiment of a camera 10 for providing the film 83. The camera 10 comprises a plurality of objective lenses 102 having their respective optical axes 103 parallel to each other and coplanar. A suitably located common shutter 104 is mechanically or electrically activated simultaneously for each lens. The lenses are focused simultaneously by a common mechanism.

The number of film frames bearing stereo related images wound onto the cassette 94 after exposure is made equal to the number of objective lenses. Application Serial No. 78300889.9 published under No. 2946, is directed to such a camera.

As disclosed above the incremental relative movement during printing between the film direction and the line grid is such that the grid is moved in the same direction as the film while the paper is stationary. Alternatively the grid may be stationary and the incremental relative movement provided by moving the paper in the direction opposite to that of the film.

## Claims

1. A method of marking film material comprising a plurality of film frames each containing an image of the same subject, the images being stereo related so that they may be used in stereoscopic reproduction, characterized by the steps of selecting homologous points (defined as two point images in a stereo related pair of images which point images exactly correspond) of each of the images, and marking the frame area surrounding each image with a mark according to the homologous points.

2. A method according to Claim 1 characterized in that the selecting of all the homologous points will determine a centre plane image for use in subsequent printing from the film frames.

3. A method according to Claim 1 characterized in that the selecting of the first homologous point will determine a centre plane image for use in subsequent printing from the film frames.

4. A method according to any one of Claims 1 to 3 characterized in that the film frames are successive film frames on a continuous strip of material.

5. A method according to Claim 4 characterized in that a first homologous point is determined from a selected image, marking the frame area surrounding the selected image according to the location and position of the first homologous point, and sequentially advancing the strip to select the homologous point for each subsequent image according to the first homologous point.

6. A method according to Claim 4 or Claim 5 characterized in that the centre-to-centre distances between selected homologous points of the images contained in each pair of adjacent film frames are equal.

7. A method according to any one of Claims 4 to 6 characterized in that the frame area surrounding each image is marked at a distance from the mark of the frame area surrounding any other image which is a multiple or a rational fraction of the distance between the homologous points of the images contained in any two frames.

8. A method of marking a continuous strip of film having successive film frames each of which contains an image of the same subject, the images being stereo related so that they may be used in stereoscopic reproduction, characterized by the steps of establishing the centre-to-centre distance between homologous points of a selected pair of images in order to determine a desired stereo base distance, and marking the frame area surrounding each image with a mark located according to the stereo base distance.

9. A method according to Claim 8 characterized in that the stereo base distance is determined by optical superimposition of the selected pair of images.

10. A method according to Claim 9 characterized in that the stereo base distance is determined according to the visual appearance of the selected pair of images when optically superimposed.

11. A method according to any one of Claims 8 to 10 characterized in that the selecting of the homologous points will determine a centre plane image for use in subsequent printing from the film frames.

12. A method according to any one of Claims 8 to 11 characterized in that the selected pair of images are the images contained in the first and last required successive film frames on the strip.

13. A method according to any one of the Claims 8 to 12 characterized in that the frame area surrounding each image is marked at a distance from the frame area surrounding any other image which is a multiple or rational fraction of the desired stereo base distance.

14. A method according to any one of Claims 8 to 13 characterized in that the desired stereo base distance is divided by the number of required successive images minus one to determine the distance between adjacent marks.

15. A method according to any one of the preceding claims characterized in that the marking of the frame area surrounding each image is performed sequentially.

16. A method according to any one of the preceding claims characterized in that the marking is accomplished mechanically.

17. A method according to Claim 16 characterized in that the marking is accomplished by a punch in the frame area surrounding each image.

18. A method according to any one of the preceding claims characterized in that the marking is accomplished by removing a portion of the frame area surrounding each image.

19. A method according to any one of Claims 1 to 15 characterized in that the marking is accomplished by changing the opacity of the frame area surrounding each image.

20. A method according to any one of Claims 1 to 15 characterized in that the marking is accomplished optically.

21. A method according to Claim 20 characterized in that the marking is accomplished by a laser removing an emulsion portion of the photosensitive material of the frame area surrounding each image.

22. A method according to Claim 20 characterized in that the marking adds base density to the emulsion portion of the photosensitive material of the frame area surrounding each image.

23. A method according to any one of the preceding claims characterized in that the plurality of film frames is a number in excess of two.

24. A method according to any one of the preceding claims characterized in that the image contained in each film frame is of the same size.

25. A method according to any one of the preceding claims and including the additional steps of using the marks to sequentially locate and position each frame for printing on photosensitive paper, printing onto the paper and mounting the print in an optical viewer.

26. An apparatus for the marking of film material comprising a plurality of film frames each containing an image of the same subject, the images being stereo related so that they may be used in stereoscopic reproduction, characterized by a support (17) for supporting a carriage assembly (21), the carriage assembly being movable on the support and having a transparent member (42) for supporting the film frames (83, 91), optical means (22, 23) on the support for optically viewing the images from at least two frames and establishing the centre-to-centre distance between homologous points (defined as two point images in a stereo related pair of images which point images exactly correspond) of those images and means for causing a mark to be placed on the frame area surrounding each image as the carriage assembly is moved in accordance with that distance.

27. An apparatus according to Claim 26 characterized in that the optical means includes adjustable lenses (49, 67) for varying said centre-to-centre distance and optical viewing of the two images.

28. An apparatus according to Claim 26 or Claim 27 characterized in that the marking means is operative to remove a selected portion of the frame area surrounding each image.

29. An apparatus according to Claim 26 or Claim 27 characterized in that the marking means is a mechanical punch (74).

30. An apparatus according to Claim 26 or Claim 27 characterized in that the marking means is an optical source (79).

31. An apparatus according to Claim 30 characterized in that the optical source is a laser (79).

32. An apparatus according to Claim 30 or Claim 31 characterized in that the optical source is operative to removed a selected portion of the emulsion from the frame area surrounding each image.

33. An apparatus according to Claim 30 or Claim 31 characterized in that the optical source is operative to add density to a selected portion of the emulsion from the frame area surrounding each image.

34. An apparatus according to any one of Claims 26 to 33 characterized in that the marking means causes a plurality of marks to be placed on the frame area surrounding each image.

35. An apparatus according to Claim 34 characterized in that each of the plurality of marks is of a different orientation relative to the frame.

36. An apparatus according to any one of Claims 26 to 35 characterized in that the marking means causes a mark to be placed sequentially on the frame areas surrounding each of a plurality of images.

37. An apparatus according to any one of Claims 26 to 35 characterized in that the carriage assembly comprises means (39, 40, 41, 42) for supporting a continuous desired length of film strip, the desired length having the required plurality of frames.

38. An apparatus according to Claim 37 characterized in that the required plurality is a number greater than two.

39. An apparatus according to Claim 37 or Claim 38 characterized in that the optical means is designed to view the images contained in the first and last frames of the required plurality.

40. An apparatus according to any one of Claims 37 to 39 characterized by means for moving said carriage assembly to advance the film strip in successive equal movements and means for effecting the marking after each incremental advance in a manner such that the spacing between the marks on the frame areas surrounding every adjacent pair of images is equal.

41. An apparatus according to any one of Claims 37 to 40 for processing a strip on which the required plurality of frames is $n$ characterized in that the optical means view the images contained in the first and the $n$th frames to determine the centre-to-centre distance between homologous points of the images contained in those frames and means are provided for controlling the carriage assembly to move between each successive pair of marking operations by a distance equal to said centre-to-centre distance divided by $(n-1)$.

42. An apparatus according to any one of Claims 26 to 41 characterized in that the carriage assembly includes an upper carriage section (32a) carrying the transparent member (42), a lower carriage section (32c) in movable engagement with the support (17), a pivot member (32b) joining the carriage sections together and mounting the first carriage section on the second carriage section for relative pivotal movement in a horizontal plane, and means (34) for effecting the relative pivotal movement.

**Revendications**

1. Procédé de marquage d'une matière de film comprenant plusieurs clichés qui contiennent chacun une image du même sujet, les images étant en relation stéréoscopique de manière qu'elles puissent être utilisées en reproduction stéréoscopique, caractérisé par les phases de sélection de points homologues, définis comme deux images de points dans un couple d'images en relation stéréoscopique, ces points d'image se correspondant exactement, dans chacune des images, et de marquage de la surface de cliché entourant chaque image avec un marquage en fonction des points homologues.

2. Procédé selon la revendication 1, caractérisé en ce que la sélection de tous les points homologues détermine une image de plan central pour l'utilisation dans un tirage ultérieur des clichés.

3. Procédé selon la revendication 1, caractérisé en ce que la sélection du premier point homologue détermine une image de plan central pour l'utilisation dans le tirage ultérieur des clichés.

4. Procédé selon l'une quelconque des revendications 1 à 3, caractérisé en ce que les clichés sont des clichés successifs sur une bande continue de matière.

5. Procédé selon la revendication 4, caractérisé en ce qu'un premier point homologue est déterminé à partir d'une image sélectionnée, en marquant la surface de cliché entourant l'image sélectionnée en fonction de la position et la localisation du premier point homologue et en avançant séquentiellement la bande pour sélectionner le point homologue de chaque image suivante en fonction du premier point homologue.

6. Procédé selon la revendication 4 ou la revendication 5, caractérisé en ce que les distances centre à centre entre des points homologues sélectionnés des images que contient chaque couple de clichés voisins sont égales.

7. Procédé selon l'une quelconque des revendications 4 à 6, caractérisé en ce que la surface de cliché entourant chaque image est marquée à une distance du marquage de la surface de cliché entourant une autre image qui est un multiple ou une fraction rationnelle de la distance entre les points homologues des images que contiennent deux clichés.

8. Procédé de marquage d'une bande continue de film portant des clichés successifs dont chacun contient une image du même sujet, les images étant en relation stéréoscopique de manière qu'elles puissent être utilisées en reproduction stéréoscopique, caractérisé par les phases d'établissement de la distance centre à centre entre des points homologues d'un couple sélectionné d'images pour déterminer une distance de base stéréoscopique désirée, et de marquage de la surface de cliché entourant chaque image avec un marquage situé en fonction de la distance de base stéréoscopique.

9. Procédé selon la revendication 8, caractérisé en ce que la distance de base stéréoscopique est déterminée par superposition optique de couple sélectionné d'images.

10. Procédé selon la revendication 9, caractérisé en ce que la distance de base stéréoscopique est déterminée en fonction de l'apparence visuelle du couple sélectionné d'images lorsqu'elles sont superposées optiquement.

11. Procédé selon l'une quelconque des revendications 8 à 10, caractérisé en ce que la sélection des points homologues détermine une image de plan central pour l'utilisation dans le tirage ultérieur des clichés.

12. Procédé selon l'une quelconque des revendications 8 à 11, caractérisé en ce que le couple sélectionné d'images est constitué par des images que contiennent les premier et dernier clichés successifs nécessaires sur la bande.

13. Procédé selon l'une quelconque des revendications 8 à 12, caractérisé en ce que la surface de cliché entourant chaque image est marquée à une distance de la surface de cliché entourant une autre image qui est un multiple ou une fraction rationnelle de la distance de base stéréoscopique désirée.

14. Procédé selon l'une quelconque des revendications 8 à 13, caractérisé en ce que la distance de base stéréoscopique désirée est divisée par le nombre d'images successives requises moins une pour déterminer la distance entre des marquages voisins.

15. Procédé selon l'une quelconque des revendications précédentes, caractérisé en ce que le marquage de la surface de cliché entourant chaque image est effectué séquentiellement.

16. Procédé selon l'une quelconque des revendications précédentes, caractérisé en ce que le marquage est effectué mécaniquement.

17. Procédé selon la revendication 16, caractérisé en ce que le marquage est effectué par un poinçon dans la surface de cliché entourant chaque image.

18. Procédé selon l'une quelconque des revendications précédentes, caractérisé en ce que le marquage est effectué en enlevant une partie de la surface de cliché entourant chaque image.

19. Procédé selon l'une quelconque des revendications 1 à 15, caractérisé en ce que le marquage est effectué en changeant l'opacité de la surface de cliché entourant chaque image.

20. Procédé selon l'une quelconque des revendications 1 à 15, caractérisé en ce que le marquage est effectué optiquement.

21. Procédé selon la revendication 20, caractérisé en ce que le marquage est effectué par un laser qui enlève une partie d'émulsion de la matière photosensible de la surface de cliché entourant chaque image.

22. Procédé selon la revendication 20, caractérisé en ce que le marquage augmente la densité de base de la partie d'émulsion de la matière photosensible de la surface de cliché entourant chaque image.

23. Procédé selon l'une quelconque des revendications précédentes, caractérisé en ce que les clichés sont en nombre dépassant deux.

24. Procédé selon l'une quelconque des revendications précédentes, caractérisé en ce que l'image que contient chaque cliché a les mêmes dimensions.

25. Procédé selon l'une quelconque des revendications précédentes, et comprenant les phases supplémentaires d'utilisation des marquages pour localiser et positionner séquentiellement chaque cliché pour le tirage sur un papier photosensible, le tirage sur le papier et le montage du tirage dans un appareil d'observation optique.

26. Appareil pour le marquage d'une matière de film comprenant plusieurs clichés qui contiennent chacun une image du même sujet, les images étant en relation stéréoscopique de manière qu'elles puissent être utilisées en reproduction stéréoscopique, caractérisé par un support (17) pour supporter un ensemble de chariot (21), l'ensemble de chariot étant mobile sur le support et comportant une pièce transparente (42) pour supporter les clichés (83, 91), un dispositif optique (22, 23) sur le support pour observer optiquement les images d'au moins deux clichés et établissant la distance centre à centre entre des points homologues, définis comme deux images de points dans un couple d'images en relation stéréoscopique ces points d'image se correspondant exactement, dans ces images, et un dispositif pour provoquer le positionnement d'un marquage sur la surface de cliché entourant chaque image quand l'ensemble de chariot est déplacé en fonction de cette distance.

27. Appareil selon la revendication 26, caractérisé en ce que le dispositif optique comporte des lentilles réglables (49, 67) pour modifier ladite distance centre à centre et pour visualiser optiquement les deux images.

28. Appareil selon la revendication 26 ou 27, caractérisé en ce que les dispositif de marquage a pour fonction d'enlever une partie sélectionnée de la surface de cliché entourant chaque image.

29. Appareil selon la revendication 26 ou la revendication 27, caractérisé en ce que le dispositif de marquage est un poinçon mécanique (74).

30. Appareil selon la revendication 26 ou la revendication 27, caractérisé en ce que le dispositif de marquage est une source optique (79).

31. Appareil selon la revendication 30, caractérisé en ce que la source optique est un laser (79).

32. Appareil selon la revendication 30 ou la revendication 31, caractérisé en ce que la source optique a pour fonction d-enlever une partie sélectionnée de l'émulsion de la surface de cliché entourant chaque image.

33. Appareil selon la revendication 30 ou la revendication 31, caractérisé en ce que la source optique a pour fonction d'ajouter de la densité à une partie sélectionnée de l'émulsion de la surface de cliché entourant chaque image.

34. Appareil selon l'une quelconque des revendications 26 à 33, caractérisé en ce que le dispositif de marquage provoque le placement de plusieurs marquages sur la surface de cliché entourant chaque image.

35. Appareil selon la revendication 34, caractérisé en ce que chacun des marquages a une orientation différente par rapport au cliché.

36. Appareil selon l'une quelconque des revendications 26 à 35, caractérisé en ce que le dispositif de marquage provoque le placement d'un marquage séquentiellement sur les surfaces de clichés, entourant chacune des images.

37. Appareil selon l'une quelconque des revendications 26 à 35, caractérisé en ce que l'ensemble de chariot comporte un dispositif (39, 40, 41, 42) portant une longueur désirée continue de bande de film, la longueur désirée comportant le nombre nécessaire de clichés.

38. Appareil selon la revendication 37, caractérisé en ce que le nombre nécessaire est un nombre plus grand que deux.

39. Appareil selon la revendication 37 ou la revendication 38, caractérisé en ce que le dispositif optique est réalisé pour visualiser les images que contiennent les premier et dernier clichés du nombre nécessaire.

40. Appareil selon l'une quelconque des revendications 37 à 39, caractérisé par un dispositif pour déplacer ledit ensemble de chariot afin d'avancer la bande de film de mouvements égaux successifs et un dispositif pour effectuer le marquage après chaque avance incrémentale d'une manière que l'espace entre les marquages sur les surfaces de clichés entourant chaque couple d'images voisines oit égal.

41. Appareil selon l'une quelconque des revendications 37 à 40, pour traiter une bande sur laquelle le nombre nécessaire de clichés est n, caractérisé en ce que le dispositif optique visualise les images que contiennent les premier et néme clichés pour déterminer la distance centre à centre entre des points homologues des images que contiennent ces clichés, et un dispositif étant prévu pour commander l'ensemble de chariot pour le déplacer entre des paires successives d'opérations de marquage d'une distance égale à ladite distance centre ä centre divisée par (n—1).

42. Appareil selon l'une quelconque des revendications 26 à 41, caractérisé en ce que l'ensemble de chariot comporte une section de chariot supérieure (32a) supportant la pièce transparente (42), une section de chariot inférieure (32c) en engagement mobile avec le support (17), une pièce de pivotement (32b) reliant les sections de chariot ensemble et supportant la première section de chariot sur la seconde section de chariot pour un mouvement pivotant relatif dans un plan horizontal et un dispositif (34) pour effectuer le mouvement pivotant relatif.

## Patentansprüche

1. Verfahren zum Markieren von Filmmaterial, das eine Vielzahl von Bildern aufweist, die jeweils ein Bild desselben Objektes darstellen, wobei die Bilder in einer Stereobeziehung stehen, so daß sie für stereoskopische Reproduktion benutzt werden können, gekennzeichnet durch die Schritte, daß für jedes Bild homologe Punkte ausgewählt werden, die als zwei Punktbilder in zwei in Stereobeziehung stehenden Bildern definiert sind, wobei die Punktbilder genau einander entsprechen, und daß der ein jedes Bild umgebende Randbereich mit einer Marke entsprechend den homologen Punkten markiert wird.

2. Verfahren nach Anspruch 1, dadurch gekennzeichnet, daß die Auswahl aller homologen Punkte ein Mittelebenenbild bestimmt, das bei einer folgenden Herstellung von Vergrößerungen der Bilder benutzt wird.

3. Verfahren nach Anspruch 1, dadurch gekennzeichnet, daß die Auswahl des ersten homologen Punktes ein Mittelebenenbild bestimmt, das bei einer folgenden Herstellung von Vergrößerungen der Bilder benutzt wird.

4. Verfahren nach einem der Ansprüche 1 bis 3, dadurch gekennzeichnet, daß die Bilder aufeinanderfolgende Bilder auf einem kontinuierlichen Materialstreifen sind.

5. Verfahren nach Anspruch 4, dadurch gekennzeichnet, daß ein erster homologer Punkt in einem ausgewählten Bild bestimmt wird, daß der das ausgewählte Bild umgebende Randbereich entsprechend dem Ort und der Position des ersten homologen Punktes markiert wird und daß der Streifen nacheinander weitertransportiert wird, damit die homologen Punkte jedes folgenden Bildes entsprechend dem ersten homologen Punkt gewählt werden.

6. Verfahren nach Anspruch 4 oder 5, dadurch gekennzeichnet, daß die Abstände von Mitte zu Mitte zwischen ausgewählten homologen Punkten der von jedem Paar benachbarter Bildränder umgebenen Bilder gleich sind.

7. Verfahren nach einem der Ansprüche 4 bis 6, dadurch gekennzeichnet, daß der jedes Bild umgebende Randbereich in einer Entfernung von der Marke des jedes andere Bild umgebenden Bildbereiches markiert wird, die ein Vielfaches oder ein rationaler Bruch des Abstandes zwischen den homologen Punkten von zwei beliebigen Bildern sind.

8. Verfahren zum Markieren eines Kontinuierlichen Filmstreifens mit aufeinanderfolgenden Bildern, die jeweils dasselbe Objekt darstellen, wobei die Bilder in einer Stereobeziehung stehen, so daß sie für stereoskopische Reproduktion benutzt werden können, gekennzeichnet durch die Schritte, daß der Abstand von Mitte zu Mitte zwischen homologen Punkten eines ausgewählten Bildpaares ermittelt wird, um eine gewünschte Stereobasisentfernung zu bestimmen, und daß der jedes Bild umgebende Randbereich mit einer Marke markiert wird, die entsprechend der Stereobasisentfernung angeordnet ist.

9. Verfahren nach Anspruch 8, dadurch gekennzeichnet, daß die Stereobasisentfernung durch optische Überlagerung der zwei ausgewählten Bilder bestimmt wird.

10. Verfahren nach Anspruch 9, dadurch gekennzeichnet, daß die Stereobasisentfernung aufgrund des Aussehens der ausgewählten zwei Bilder bei optische Überlagerung bestimmt wird.

11. Verfahren nach einem der Ansprüche 8 bis 10, dadurch gekennzeichnet, daß durch die Auswahl der homologen Punkte eine Mittelebenenbild bestimmt wird, das bei einer folgenden Herstellung von Vergrößerungen der Bilder benutzt wird.

12. Verfahren nach einem der Ansprüche 8 bis 11, dadurch gekennzeichnet, daß die ausgewählten zwei Bilder das erste und bas letzte erforderliche von aufeinanderfolgenden Bildern auf dem Streifen sind.

13. Verfahren nach einem der Ansprüche 8 bis 12, dadurch gekennzeichnet, daß der jedes Bild umgebende Randbereich in einer Entfernung von Randbereich jedes anderen Bildes markiert wird, die eine Vielfaches oder ein rationaler Bruch der gewünschten Stereobasisentfernung ist.

14. Verfahren nach einem der Ansprüche 8 bis 13, dadurch gekennzeichnet, daß die gewünschte Stereobasisentfernung durch die Anzahl der benötigten aufeinanderfolgenden Bilder minus eins geteilt wird, um die Entfernung zwischen aufeinanderfolgenden Marken zu bestimmen.

15. Verfahren nach einem der vorangehenden Ansprüche, dadurch gekennzeichnet, daß das Markieren des Randbereiches eines jeden Bildes nacheinander erfolgt.

16. Verfahren nach einem der vorangehenden Ansprüche, dadurch gekennzeichnet, daß das Markieren mechanisch durchgeführt wird.

17. Verfahren nach Anspruch 16, dadurch gekennzeichnet, daß das Markieren erfolgt, indem der ein jedes Bild umgebende Randbereich mit einem Dorn bearbeitet wird.

18. Verfahren nach einem der vorangehenden Ansprüche, dadurch gekennzeichnet, daß das Markieren erfolgt, indem eine Abschnitt des jedes Bild umgebenden Randbereiches entfernt wird.

19. Verfahren nach einem der Ansprüche 1 bis 15, dadurch gekennzeichnet, daß das Markieren erfolgt, indem die Opazität des jedes Bild umgebenden Randbereiches geändert wird.

20. Verfahren nach einem der Ansprüche 1 bis 15, dadurch gekennzeichnet, daß das Markieren optische erfolgt.

21. Verfahren nach Anspruch 20, dadurch gekennzeichnet, daß das Markieren erfolgt, indem mittels eines Lasers ein Teil der Emulsion des lichtempfindlichen Materials des jedes Bild umgebenden Randbereiches entfernt wird.

22. Verfahren nach Anspruch 20, dadurch gekennzeichnet, daß durch das Markieren die Grundschwärzungsdichte des Emulsionsteils des lichtempfindlichen Materials des jedes Bild umgebenden Randbereiches vergrößert wird.

23. Verfahren nach einem der vorangehenden Ansprüche, dadurch gekennzeichnet, daß es sich bei der Vielzahl von Bildrändern um mehr als zwei Bildränder handelt.

24. Verfahren nach einem der vorangehenden Ansprüche, dadurch gekennzeichnet, daß alle Bildränder Bilder gleicher Größe umgeben.

25. Verfahren nach einem der vorangehenden Ansprüche, das die zusätzlichen Schritte umfaßt, daß die Marken zur aufeinanderfolgenden Lokalisierung und Positionierung jedes Bildes zum Herstellen einer Vergrößerung auf lichtempfindlichen Papier benutzt werden, daß auf dem lichtempfindlichen Papier eine Vergrößerung hergestellt wird und daß die Vergrößerung in ein optisches Betrachtungsgerät eingesetzt wird.

26. Vorrichtung zum Markieren von Filmmaterial, das eine Vielzahl von Bildern aufweist, die jeweils ein Bild desselben Objektes darstellen, wobei die Bilder in einer Stereobeziehung stehen, so daß sie für stereoskopische Reproduktion benutzt werden können, gekennzeichnet durch ein Bett (17), das eine Schlittenbaugruppe (21) trägt, die auf dem Bett bewegbar ist und mit einem lichtempfindlichen Element (42) versehen ist, das die Bildränder (83, 91) trägt, eine optische Einrichtung (22, 23) am Bett, die zur optischen Betrachtung von zumindest zwei von jeweils einem Bildrand umgebenen Bildern und zur Bestimmung des Abstandes von Mitte zu Mitte zwischen homologen Punkten dieser Bilder (definiert als zwei Punktbilder in zwei in Stereobeziehung stehenden Bildern, wobei die Punktbilder genau einander entsprechen) dient, und eine Markiereinrichtung zum Aufbringen einer Marke im jedes Bild umgebenden Randbereich, wobei die Schlittenbaugruppe entsprechend der genannten Entfernung bewegt wird.

27. Vorrichtung nach Anspruch 26, dadurch gekennzeichnet, daß die optische Einrichtung einstellbare Linsen (49, 67) zum Verändern des Abstandes von Mitte zu Mitte und zum optischen Betrachten der zwei Bilder umfaßt.

28. Vorrichtung nach Anspruch 26 oder 27, dadurch gekennzeichnet, daß die Markiereinrichtung in der Weise arbeitet, daß ein ausgewählter Teil des jedes Bild umgebenden Randbereiches enfernt wird.

29. Vorrichtung nach Anspruch 26 oder 27, dadurch gekennzeichnet, daß die Markiereinrichtung ein mechanischer Dorn (74) ist.

30. Vorrichtung nach Anspruch 26 oder 27, dadurch gekennzeichnet, daß die Markiereinrichtung eine otpische Quelle (79) ist.

31. Vorrichtung nach Anspruch 30, dadurch gekennzeichnet, daß die optische Quelle ein Laser (79) ist.

32. Vorrichtung nach Anspruch 30 oder Anspruch 31, dadurch gekennzeichnet, daß die optische Quelle in der Weise arbeitet, daß ein ausgewählter Teil der Emulsion vom jedes Bild umgebenden Randbereich entfernt wird.

33. Vorrichtung nach Anspruch 30 oder 31, dadurch gekennzeichnet, daß die optische Quelle in der Weise arbeitet, daß die Schwärzungsdichte eines ausgewählten Teils der Emulsion im jedes Bild umgegenden Randbereich vergrößert wird.

34. Vorrichtung nach einem der Ansprüche 26 bis 35, dadurch gekennzeichnet, daß die Markiereinrichtung bewirkt, daß eine Vielzahl von Marken im jedes Bild umgebenden Randbereich aufgebracht werden.

35. Vorrichtung nach Anspruch 34, dadurch gekennzeichnet, daß jede der Vielzahl von Marken eine jeweils andere Orientierung bezüglich des Bildes hat.

36. Vorrichtung nach einem der Ansprüche 26 bis 35, dadurch gekennzeichnet, daß die Markiereinrichtung bewirkt, daß eine Marke nacheinander auf die jedes der Vielzahl von Bildern umgebenden Randbereiche aufgebracht wird.

37. Vorrichtung nach einem der Ansprüche 26 bis 35, dadurch gekennzeichnet, daß die Schlittenbaugruppe Mittel (39, 40, 41, 42) umfaßt, die einem Kontinuierlichen Filmstreifen gewünschter Länge tragen können, wobei die gewünschte Länge die erforderliche Vielzahl von Bildern aufweist.

38. Vorrichtung nach Anspruch 37, dadurch gekennzeichnet, daß die erforderliche Vielzahl eine Anzahl größer als zwei ist.

39. Vorrichtung nach Anspruch 37 oder Anspruch 38, dadurch gekennzeichnet, daß die optische Einrichtung derart ausgebildet ist, daß die dem ersten und dem letzten Bildrand der erforderlichen Vielzahl zugeordneten Bilder betrachtet werden.

40. Vorrichtung nach einem der Ansprüche 37 bis 39, gekennzeichnet durch Mittel zum Bewegen der Schlittenbaugruppe in der Weise, daß der Filmstreifen in aufeinanderfolgenden gleichen Bewegungen weitertransportiert wird, und durch Mittel, durch die das Markieren nach jedem Bewegungsschritt in der Weise bewirkt wird, daß der Abstand zwischen den Marken auf den alle zwei benachbarten Bilder eines Paares umgebenden Randbereichen gleich ist.

41. Vorrichtung nach einem der Ansprüche 37 bis 40 zum Verarbeiten eines Streifens, auf dem die erforderliche Vielzahl von Bildrändern n ist, dadurch gekennzeichnet, daß die optische Einrichtung die Bilder im ersten und im n-ten Bildrand zur Bestimmung des Abstandes von Mitte zu Mitte zwischen homologen Punkten der Bilder in diesen Bidrändern betrachte und daß Mittel zur Steuerung der Schlittenbaugruppe in der Weise vorgesehen sind, daß sich die Schlittenbaugruppe zwischen zwei aufeinanderfolgenden Markiervorgängen um eine Strecke bewegt, die gleich dem genannten Abstand von Mitte zu Mitte geteilt durch (n—1) ist.

42. Vorrichtung nach einem der Ansprüche 26 bis 41, dadurch gekennzeichnet, daß die Schlittenbaugruppe einen oberen Schlittenabschnitt (32a), der das transparente Element (42) trägt, einen unteren Schlittenabschnitt (32c), der in bewegbarem Eingriff mit dem Bett (17) steht, ein Gelenkelement (32b), das die Schlittenabschnitte verbindet und den ersten Schlittenabschnitt am zweiten Schlittenabschnitt derart hält, daß in einer waagerechten Ebene eine Relativschwenkung möglich ist, und Mittel (34) umfaßt, die die Relativschwenkung bewirken.

CAMERA 10 → FILM PROCESSING 11 → OPTICAL BENCH 12 → ENLARGER 13

Fig.1.

LINE GRID AND PRINT 14 → PRINT PROCESSING 15 → STEREO PHOTOGRAPH ASSEMBLY 16

Fig.21.

103  103  103  103  83  94

104  104  104  104  10
102

Fig.16.

50
50a
58
54
57
23
52  55  49  53
56
91  91
66  67
22
65  65

Fig.2.

Fig. 3.

Fig.4

Fig. 5

Fig. 6.

Fig. 7.

Fig.8.

Fig.9.

0 002 944

Fig.10.

Fig. 11.

Fig. 12.

Fig.13.

Fig.15.

Fig.14.

Fig.17.

Fig.20.

Fig.18.

Fig.19.